# FASCICULE DE BREVET EUROPEEN

(11) **EP 2 226 284 B1**
(45) Date de publication et mention de la délivrance du brevet: **07.09.2011**
(21) Numéro de dépôt: 09003011.5
(22) Date de dépôt: 03.03.2009
(51) Int. Cl.: B65H 75/40, H02G 11/02

(54) **Enrouleur de câble électrique**
Aufrollvorrichtung für elektrisches Kabel
Power cable winder

(43) Date de publication de la demande: 08.09.2010
(73) Titulaire: MACC, 86104 Chatellerault Cédex (FR)
(72) Inventeur: Cupif, Bertrand, BP 427 86104 Chatellerault Cedex (FR)

(56) Documents cités:
- WO-A-03/026995
- DE-A1- 4 005 223
- DE-A1- 10 010 198
- NL-C2- 1 031 731

## Description

La présente invention concerne un enrouleur de câble électrique avec contact tournant plus ergonomique lors de l'enroulage que les modèles existant sur le marché.

Ces derniers sont pourvus côté tambour d'un bobinot permettant d'enrouler le cordon de raccordement au réseau électrique mais qui ont pour inconvénient de voir la main qui procède à l'enroulement, gêner par le bobinot. WO 03/02 6995 décrit un enrouleur selon le préambule de la revendication 1, permettant l'enroulement et le déroulement manuel du câble électrique pour l'utilisation d'une poignée de manoeuvre.

Dans la présente invention, le bobinot est fixé sur le châssis, côté opposé du tambour, délimitant ainsi deux parties distinctes et autonomes, ne se gênant pas lors de l'utilisation.
La figure 1 représente le produit vu en perspective du côté châssis.
La figure 2 représente le produit vu en perspective côté tambour.
La figure 3 représente une section transversale du produit passant par l'axe de rotation.
La figure 4 représente le châssis seul.
La figure 5 représente un éclaté du tambour et du contact tournant.
La figure 6 représente un éclaté de l'intérieur du tambour et de la prise du câble électrique.
La figure 7 représente le câblage intérieur du bobinot.

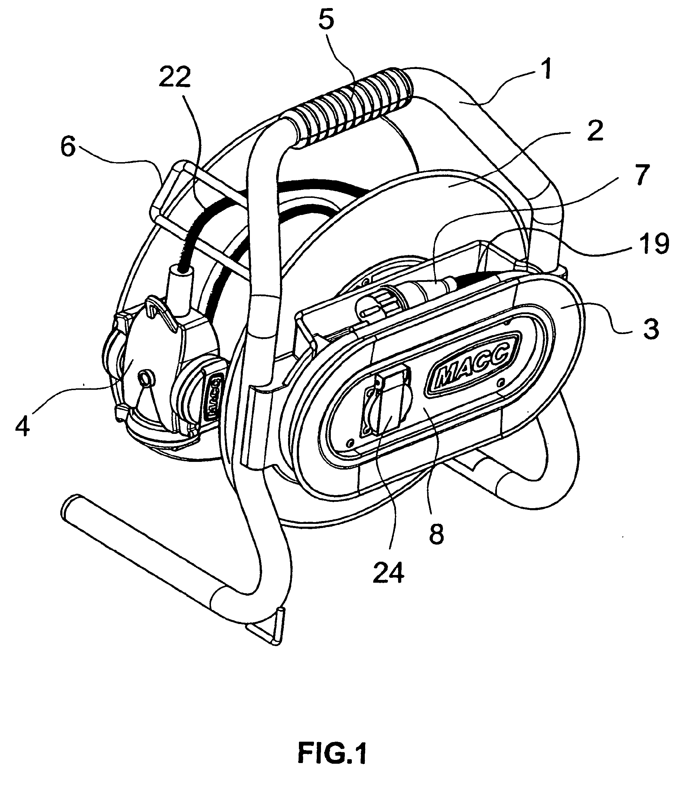

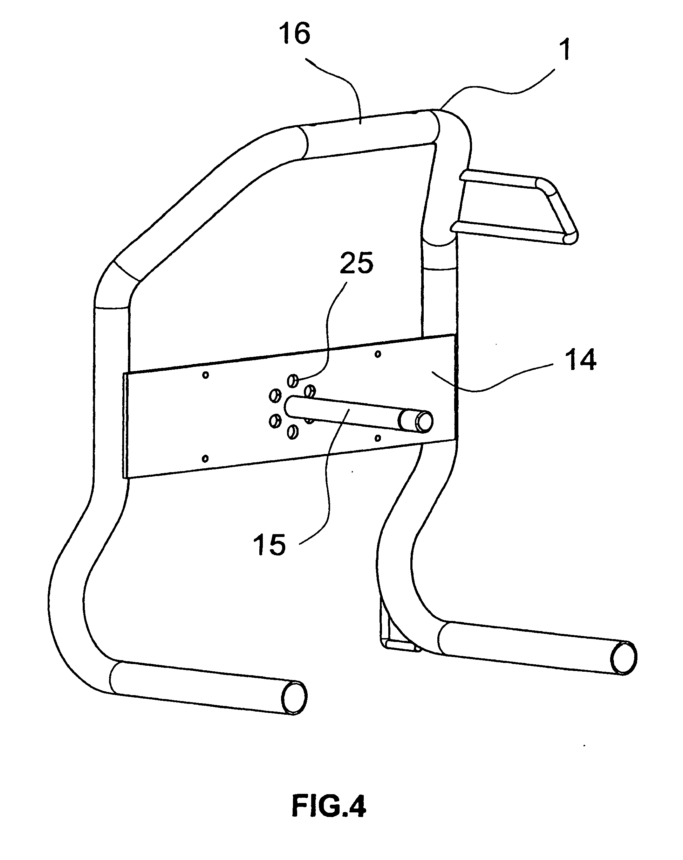

Selon les figures 1 et 4, la présente invention est composée d'un châssis (1) réalisé avec un tube cintré (16) et muni d'une poignée (5); d'une platine (14) trouée de six perçages (25) entourant un axe de rotation (15) soudé sur cette même platine (14) solidaire du châssis (1). Un tambour (2) positionné sur l'axe de rotation (15) sert à l'enroulement et au déroulement du câble électrique (22) qui passe dans une pièce en fil en forme de "U" (6) soudée au châssis (1) permettant ainsi le maintien de la prise (4) du câble électrique (22) en position d'enroulement maximum et de guidage du même câble lors de son déroulement.

Selon les figures 1 et 4, le bobinot (3) est fixé sur la platine (14) du côté opposé à l'axe de rotation (15). Ce bobinot (3) est composé d'un capot (8) sur lequel est fixé un socle (24). C'est autour de ce bobinot (3) que s'enroule le câble d'alimentation (19) dont la prise (7) vient trouver son logement au sein dudit bobinot (3) permettant ainsi au câble d'alimentation (19) de ne pas se dérouler intempestivement pendant le transport.

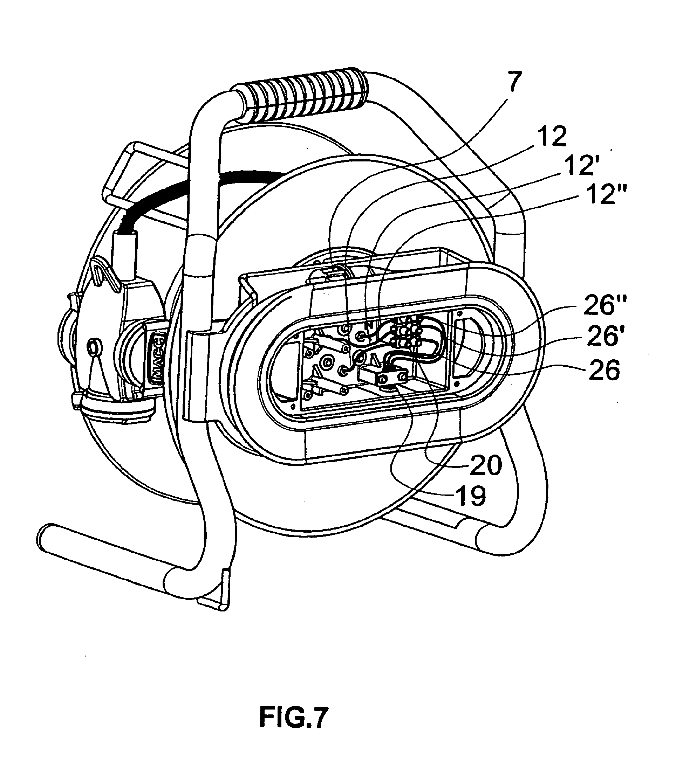

Selon les figures 1, 3 et 7, le socle (24) est relié via les fils (12) (12') (12") au bornier (20) lui-même relié au câble d'alimentation (19) via les fils (26) (26') (26").

Le fait de fixer un socle (24) sur le bobinot (3) lui-même fixé directement sur le châssis (1) permet de brancher un appareil électrique extérieur sans gêner l'enroulement ou le déroulement du câble électrique (22) qui se fait en tenant une poignée de manoeuvre (27) et permet d'obtenir ainsi une meilleure ergonomie dans l'utilisation du contact tournant.

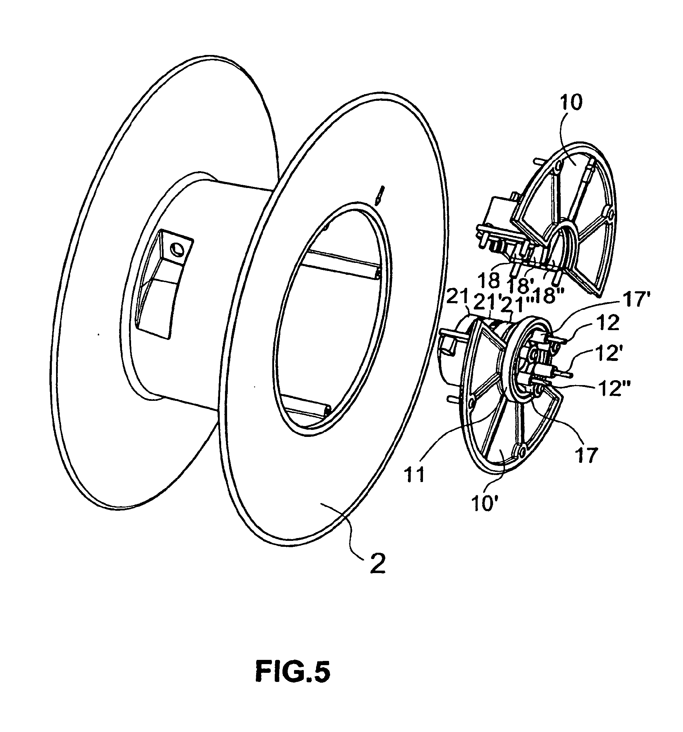

Selon les figures 4 et 5, le tambour (2) est fermé par deux demi coquilles (10) (10') qui comportent des contacts conducteurs élastiques (18) (18') (18") qui pivotent autour du support de bagues (11) placé sur l'axe de rotation (15) autour duquel se trouvent trois bagues de frottement (21) (21') (21").

Selon les figures 1, 3 et 5, les fils (12) (12') (12") sont soudés aux bagues de frottement (21) (21') (21 ") fixées sur la pièce support de bagues (11).

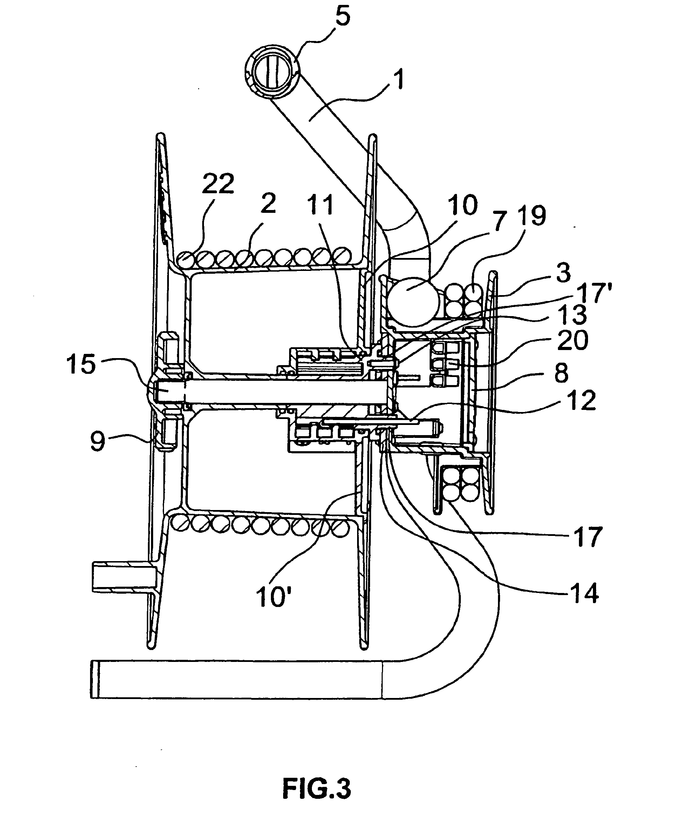

Selon les figures 3, 4 et 5, le support de bagues (11) est immobilisé pendant la rotation du tambour (2) par six tétons (17) (17') qui traversent la platine (14) dans les six perçages (25).

Selon les figures 3, 4 et 5, lors de la rotation du tambour (2) autour de l'axe de rotation (15) et du support de bagues (11), les contacts conducteurs élastiques (18) (18') (18") frottent sur les bagues de frottement (21) (21') (21") formant ainsi un contact tournant et permettant de faire la liaison électrique.

Selon les figures 1, 3, 5 et 7, les fils (12) (12') (12") sont soudés aux bagues de frottement (21) (21') (21") et traversent trois des six tétons (17) (17') pour rejoindre le bornier (20) et le socle (24).

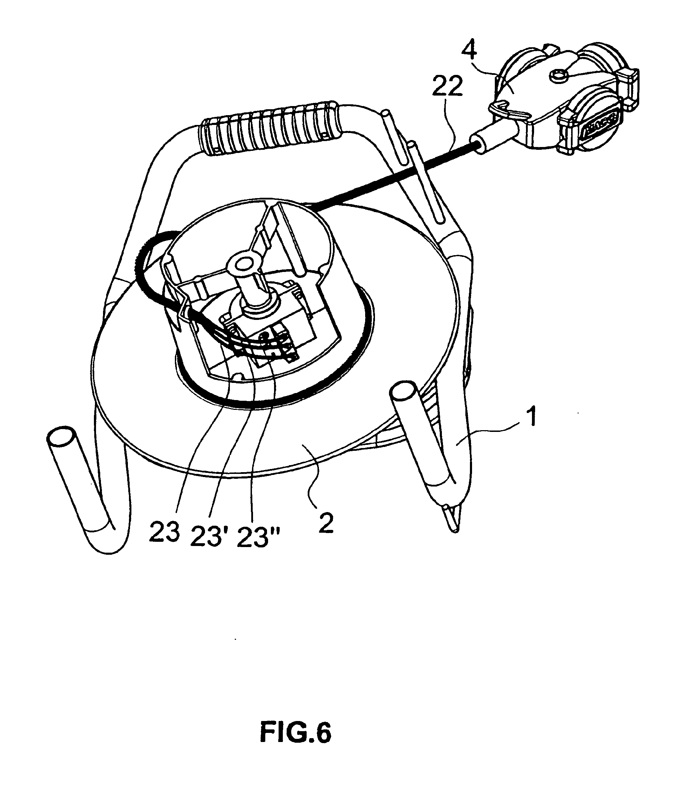

Selon les figures 5 et 6, le câble (22) est composé de trois fils (23) (23') (23") reliés à l'une de leurs extrémités aux contacts conducteurs élastiques (18) (18') (18") et à la seconde extrémité, à la prise (4) pour alimenter des appareils électriques.

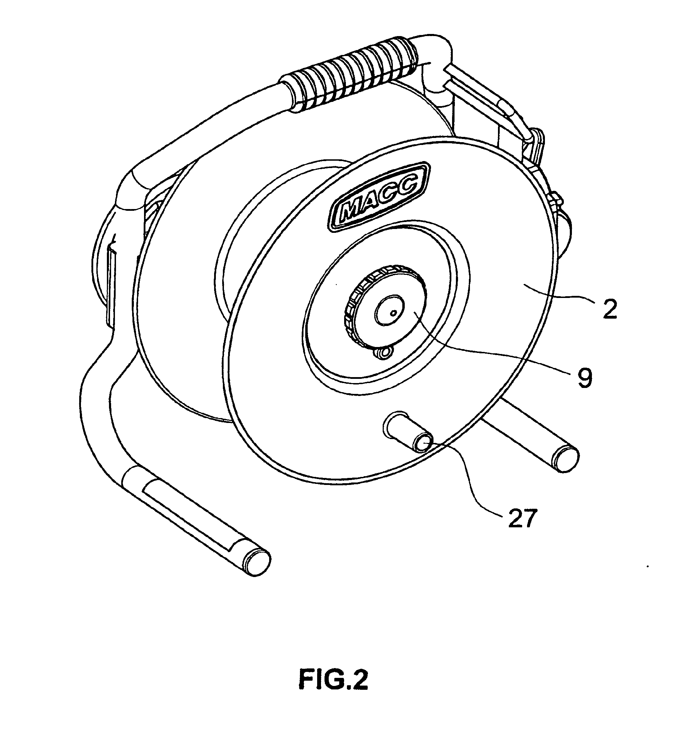

Selon les figures 2 et 3, le tambour (2) est muni d'une pièce taraudée (9) qui se visse sur l'axe de rotation (15) et qui permet de freiner ou stopper le tambour pour faciliter le stockage du câble électrique (22) et d'empêcher un déroulement intempestif ou trop rapide.

## Revendications

1. Enrouleur de câble électrique composé d'un châssis (1) réalisé avec un tube cintré (16) muni d'une poignée (5) sur lequel est solidarisée une platine (14) sur laquelle est soudé un axe de rotation (15) autour duquel tourne un tambour (2) sur lequel s'enroule ou se déroule un câble électrique (22) composé de trois fils (23) (23') (23") et connecté à des contacts conducteurs élastiques (18) (18') (18") d'un côté et à une prise (4) de l'autre, la liaison électrique se faisant par frottement entre des bagues de frottement (21) (21') (21") et les contacts conducteurs élastiques (18) (18') (18"), un bobinot (3) étant fixé sur la platine (14) du côté opposé de l'axe de rotation (15) permettant ainsi de ne pas gêner l'enroulement ou le déroulement du câble électrique (22), **caractérisé en ce que** trois tétons creux (17') liés au support de bagues (11) en traversant la platine (14) du châssis (1) par trois des six perçages (25) permettent d'assurer l'anti rotation du support de bagues (11) et permettent à trois fils (12) (12') (12") de relier les trois bagues de frottement (21) (21') (21") à un bornier (20) qui relie d'une part via trois fils (26) (26') (26") un câble d'alimentation (19) permettant le branchement au réseau électrique via une prise (7) et d'autre part un socle (24) fixé à un capot (8) fixé lui-même sur le bobinot (3), cet ensemble de moyens permettant l'enroulement manuel ou le déroulement manuel du câble électrique (22) par l'utilisation d'une poignée de manoeuvre (27) permettant de réaliser cet enroulement et déroulement avec le branchement continu des appareils électriques tant au bout de la prise (4) que celui branché sur le socle (24) et permettant d'obtenir une meilleure ergonomie dans l'utilisation de l'enrouleur de câble électrique.

2. Enrouleur de câble électrique composé d'un châssis (1) réalisé avec un tube cintré (16) muni d'une poignée (5) selon revendication 1, **caractérisé en ce que** le câble d'alimentation (19) s'enroule autour du bobinot (3) en position de rangement et dans lequel la prise (7) se trouvant à l'extrémité extérieure du câble d'alimentation (19) trouve son logement et permet ainsi au dit câble de ne pas se dérouler intempestivement pendant le transport.

3. Enrouleur de câble électrique composé d'un châssis (1) réalisé avec un tube cintré (16) muni d'une poignée (5) selon revendication 1, **caractérisé en ce que** le tambour (2) est fermé côté platine (14) par deux demi coquilles (10) (10') équipées des contacts conducteurs élastiques (18) (18') (18") qui pivotent autour d'un support de bagues (11) sur lequel sont fixées les bagues de frottement (21) (21') (21 ").

## Claims

1. An electrical cable reel comprised of a frame (1) made with a bent tube (16) equipped with a handle (5), made integral with a plate (14) to which a rotation spindle (15) is welded, around which rotates a drum (2) designed for winding up or unwinding an electrical cable (22) made up of three wires (23) (23') (23") and connected to elastic conductor contacts (18) (18') (18") on one side and a connector (4) on the other, wherein the electrical connection is made by friction between friction rings (21) (21') (21") and the elastic conductor contacts (18) (18') (18"), a bobbin (3) is fastened to the plate (14) on the side opposite the rotating spindle (15) so as to not hinder the winding or unwinding of the electrical cable (22), **characterised in that** three hollow dog points (17') attached to the ring support (11) by passing through the plate (14) of the frame (1) via three of the six holes (25) make it possible to prevent the rotation of the ring support (11) and allow the three wires (12) (12') (12") to connect the three friction rings (21) (21') (21") to a terminal block (20) which firstly connects a power cable (19) via three wires (26) (26') (26") to allow connection to the mains via a connector (7) and secondly a base (24) fixed to a cap (8) that is itself fixed to the bobbin (3), wherein these different means allow the manual winding up or unwinding of the electrical cable (22) by means of a manoeuvring handle (27) which allows such winding up and unwinding with the continuous connection of electrical devices both at the connector (4) end and the base (24) end in order to make the electrical cable winder reel more ergonomic in use.

2. An electrical cable reel comprised of a frame (1) made with a bent tube (16) equipped with a handle (5) according to claim 1, **characterised in that** the power cable (19) winds up around the bobbin (3) in the storage position and in which the connector (7) located at the outer end of the power cable (19) finds a slot and thus prevents the said cable from unwinding unintentionally during transport.

3. An electrical cable reel comprised of a frame (1) made with a bent tube (16) equipped with a handle (5) according to claim 1, **characterised in that** the drum (2) is closed near the plate (14) by two half shells (10) (10') equipped with elastic conductor contacts (18) (18') (18") that turn around a ring support (11) on which the friction rings (21) (21') (21 ") are fastened.

## Patentansprüche

1. Kabeltrommel bestehend aus einem gebogenen Rohr (16) hergestellten Gestell (1) mit einem Griff (5), auf dem eine Platine (14) befestigt ist, auf der eine Drehachse (15) geschweißt ist, um die sich eine Trommel (2) dreht, auf der ein aus drei Drähten (23) (23') (23") bestehendes elektrisches Kabel (22) auf- und abgewickelt werden kann, das auf der einen Seite an elastische leitfähige Kontakte (18) (18') (18") und auf der anderen Seite an einen Stecker (4) angeschlossen ist, wobei die elektrische Verbindung durch Reibung zwischen Schleifringen (21) (21') (21") und den elastischen leitfähigen Kontakten (18) (18') (18") entsteht und wobei auf der der Drehachse (15) entgegengesetzten Seite eine Bobine (3) auf der Platine (14) befestigt ist, sodass das Auf- und Abwickeln des elektrischen Kabels (22) nicht behindert wird, **dadurch gekennzeichnet, dass** drei hohle Zapfen (17') mit der Ringhalterung (11) verbunden sind, indem sie die Platine (14) des Gestells (1) an drei der sechs Bohrungen (25) durchdringen und **dadurch** eine Drehsperre für die Ringhalterung (11) bilden und drei Drähten (12) (12') (12") ermöglichen, die drei Schleifringe (21) (21') (21") mit einer Anschlussklemme (20) zu verbinden, die einerseits über drei Drähte (26) (26') (26") ein Stromkabel (19) für den Anschluss durch einen Stecker (7) an das Stromnetz und andererseits einen an eine Haube (8) fixierten Sockel (24), die wiederum an der Bobine (3) fixiert ist, verbindet, wobei diese gesamten Mittel das manuelle Auf- oder Abwickeln des Stromkabels (22) durch Verwendung eines Bedienungsgriffes (27) ermöglichen, wobei die elektrischen Geräte sowohl am Ende des Steckers (4) als auch am Sockel (24) durchgehend angeschlossen bleiben können, wodurch bei der Anwendung der Kabeltrommel eine größere Ergonomie erreicht wird.

2. Kabeltrommel bestehend aus einem gebogenen Rohr (16) hergestellten Gestell (1) mit einem Griff (5) nach Anspruch 1, **dadurch gekennzeichnet, dass** das Stromkabel (19) in der Aufräumposition um die Bobine (3) gewickelt wird und bei der der Stecker (7) am äußeren Ende des Stromkabels (19) seine Aufnahme hat und so verhindert, dass sich das Kabel beim Transport ungewollt abwickelt.

3. Kabeltrommel bestehend aus einem gebogenen Rohr (16) hergestellten Gestell (1) mit einem Griff (5) nach Anspruch 1, **dadurch gekennzeichnet, dass** die Trommel (2) auf der Seite der Platine (14) durch zwei Halbschalen (10) (10') mit elastischen leitfähigen Kontakten (18) (18') (18") geschlossen ist, die um eine Ringhalterung (11) schwenken, an der die Schleifringe (21) (21') (21") befestigt sind.
